# EUROPEAN PATENT APPLICATION

(11) **EP 2 996 073 A1**
(43) Date of publication of application: **16.03.2016**
(21) Application number: 14184026.4
(22) Date of filing: 09.09.2014
(51) Int. Cl.: G06Q 10/06

(54) **A method for increasing the work performance of a manufacturing executing system (MES) and an enterprise resource planning system (ERP)**

(71) Applicant: Siemens Aktiengesellschaft, 80333 München (DE)
(72) Inventor: Raviola, Alessandro, 16156 Genova (IT); Reggio, Elena, 16133 Genova (IT)
(74) Representative: Maier, Daniel Oliver

(57) **Abstract**

The present invention discloses a method for increasing the work performance of a manufacturing executing system (MES) and an enterprise resource planning system (ERP), said method comprising the steps of:
a) providing the enterprise resource planning system being enabled for planning the business resources of a production plant and for releasing production orders to the manufacturing execution system;
b) providing the manufacturing execution system being enabled to control and to execute a production process on the production plant according to the production orders,
c) creating an operation schedule by the enterprise resource planning system; said operation schedule representing a production workflow of the production process;
d) creating a number of operation definitions; each operating definition comprising a catalogue of pre-defined respective work orders;
e) downloading the operation schedule by the enterprise resource planning system thereby creating a set of corresponding work orders being executable by the manufacturing execution system; said creation being achieved by extracting at least one of the pre-defined work orders relevant to the operation schedule from the catalogues;
f) updating the quantities for the production process in the extracted work orders by the manufacturing execution system;
g) executing the updated work orders under the control of the manufacturing execution system; and
h) preparing operation performance data on the executed work orders by the manufacturing execution system, and
i) calculate the process operation performance by the enterprise resource planning system (ERP).

## Description

The present invention relates to a method for increasing the work performance of a manufacturing executing system (MES) and an enterprise resource planning system (ERP).

As it is well known, a method for manufacturing processes planned by an Enterprise Resource Planning (ERP) and produced by a shop floor, provides a Manufacturing Executing System (MES) for modeling, planning, scheduling and implementing the manufacturing processes and controlling the corresponding production steps at plant floor level.

In particular, an Enterprise Resource Planning System - hereinafter referred to as ERP - is a system including hardware devices and corresponding software applications for planning the business resources of an enterprise, i.e. material provisions, human resource managements, purchasing, orders, profits, finance, inventory controls, customer managements, etc., while the term "shop floor" has been used to indicate a system supporting the control of single machines performing production actions and being involved in the manufacturing processes, for example by measuring the number of pieces produced per hour by each machine or the functioning parameters thereof, the quality of the pieces produced and so on.

A Manufacturing Execution System - hereinafter referred to as MES - is an intermediate layer providing computing machines and software tools between the ERP upper layer and the shop floor lower layer, including a software tool for production order management, which receives requests of production from the ERP, and a software tool for production modeling, which supports the phases of selecting and managing the resources to be involved in the manufacturing processes, i.e. employees, machines and materials, in order to realize a planned manufacturing process within required time constrains.

Therefore, manufacturing execution systems being regulated by the ANSI/ISA/95 standard require modeling plant equipment for both scheduling and controlling activities. Therefore, the productive process typically consists of production request which define a request for production for a single product. The predefined product is identified by a production rule, each of which is divided in many segment requirements that represent simple productive actions which are controlled by the MES.

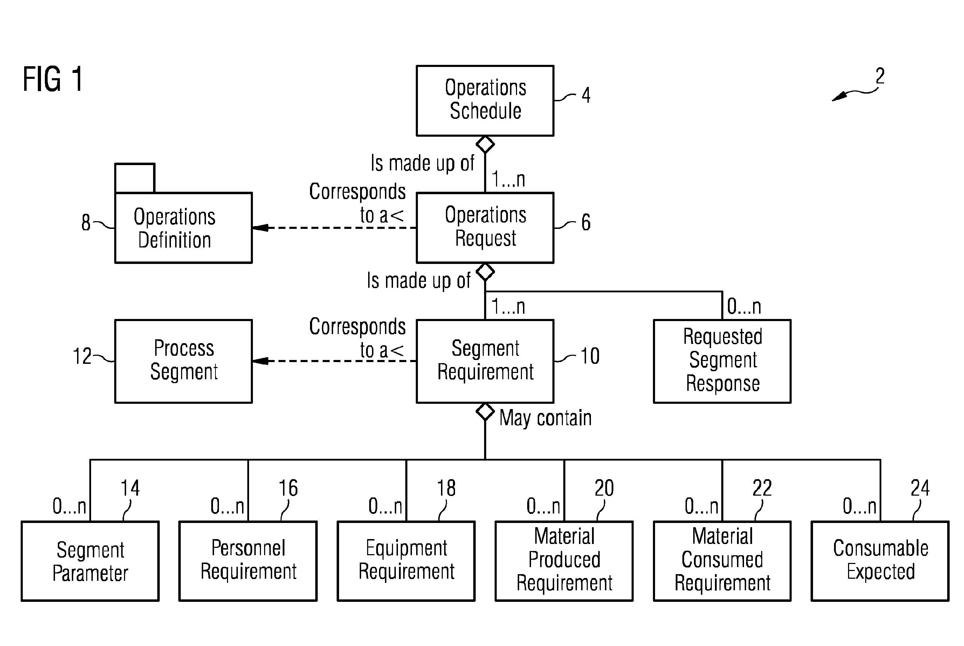

Thus, a production request (could be also called operation request or work order) contains at least one segment requirement; even it spans all production of the product. A segment requirement contains at least on material produced requirement with the identification, the quantity and the units of measure of the product to be produced. Usually, in MES, the user would like to modify the quantity of the product to be produced due to various reasons, such as machine down time, shortage of material, absence of personnel. Of course, it would be desirable that the MES system comprises a mechanism able to modify all the quantity of the resources involved (e.g. material in input, personnel, equipment) by rescaling the resources involved. The architectural and logical set-up is schematically shown in Figure 1.

For example, supposing an initial production request of 1000 kg tomato sauce will require 1400 kg of tomatoes, 100 kg of Basil and 20 kg of salt and other spices. The user plans this production request and after start of the execution of this production process a shortage of tomatoes shows up, for example only 700 kg tomatoes available due to the failure of a new delivery in time. Now, the user has to update the initial production request from 1000 kg tomato sauce to 500 kg tomato sauce which will now require to change all the other resources involved such as 700 kg tomatoes, 50 kg Basil and 10 kg of salt and other spices. Further, also some equipment can be made re-available for other production requests since for example the cooking station is only used for 30 min instead of 60 minutes. Sometimes the simple linear rescaling as given in this example does not reflect the true situation on the resources involved and a more complex calculation needs to be performed.

Another critical problem for the MES is to react immediately to the operation schedules developed by the ERP. In this activity, the creation of work orders from the operation schedule is one of the most challenging tasks in the interaction of the MES and the ERP and should be therefore operated under the best performance circumstances possible. Typically, a work order is rather complex in terms of execution steps, resources and parameter that its creation from scratch is very time consuming and often not compatible with the mostly tight manufacturing schedules.

Unfortunately, the work orders are currently generated from scratch starting from a respective Operation Definition or are created by the collection of all data coming from the ERP, e.g. processing a file in B2MML which is the format of the Operation Request. Therefore, the creation of the work orders is heavily dependent to the amount of sub-entities of which it is composed: process segments, resource requirements (material, personnel, equipment), process parameters, dependencies among process segments, equipments and so on. Sometimes, a work order template is used but this template doesn't usually satisfy the ERP request on the operation schedule under high performance requirements since the template has to be usually dramatically changed in order to fit the current ERP request.

Another possible way is the bulk import without performing any check on data: it is the fastest way to create a work order but this way also introduces other problems related to the data consistency. Of course, these problems cannot be considered minor problems with respect to the performance.

It is therefore an objective of the present invention to provide a method for increasing the work performance of a manufacturing executing system (MES) and an enterprise resource planning system (ERP) which enables an effective creation of work orders when the ERP downloads the work orders related to the corresponding operation schedule.

This objective is achieved according to the present invention by a method for increasing the work performance of a manufacturing executing system (MES) and an enterprise resource planning system (ERP), said method comprising the steps of:
a) providing the enterprise resource planning system being enabled for planning the business resources of a production plant and for releasing production orders to the manufacturing execution system;
b) providing the manufacturing execution system being enabled to control and to execute a production process on the production plant according to the production orders,
c) creating an operation schedule by the enterprise resource planning system; said operation schedule representing a production workflow of the production process;
d) creating a number of operation definitions; each operating definition comprising a catalogue of pre-defined respective work orders;
e) downloading the operation schedule by the enterprise resource planning system thereby creating a set of corresponding work orders being executable by the manufacturing execution system; said creation being achieved by extracting at least one of the pre-defined work orders relevant to the operation schedule from the catalogues;
f) updating the quantities for the production process in the extracted work orders by the manufacturing execution system;
g) executing the updated work orders under the control of the manufacturing execution system; and
h) preparing operation performance data on the executed work orders by the manufacturing execution system, and
i) calculate the process operation performance by the enterprise resource planning system (ERP).

The present method therefore allows to improve the efficiency and load reduction for the process of the work order creation which is a crucial activity involving the interface of the MES and ERP. In particular, since the work orders are now instantiated from operation definitions, the catalogue of work order enables the download of the respective involved work orders since the operation definitions represent the engineering entity that defines how specific manufacturing operations for the categories production, maintenance, inventory and quality have to be performed.

In order to separate the creation of the catalogue and the creation of the work order after the request for downloading the operation schedule, the present invention advantageously may provide the step of filling the catalogue by an asynchronous job at engineering level of the manufacturing execution system. Asynchronous means at this point that the step of defining the work orders in the catalogue and the creation of the work orders after downloading the operation schedule are processes which are completely decoupled one from the other.

Preferred embodiments of the present invention are described hereinafter more detailed with reference to the following drawings which depict in:
- Figure 1: schematically a logical set-up of the work flow in response to an operation schedule;
- Figure 2: schematically different patterns for work orders that correspond to a specific operation definition; and
- Figure 3: schematically a workflow of an algorithm which handles the request of the ERP to download the operation schedule in terms of the extraction of the respective work orders.

Figure 1 shows a logical set-up 2 of a work flow in response to an operation schedule 4 which is made of a number of operation requests 6 which represents a number of work orders in runtime. The operation request 6 corresponds to an operation definition 8 which represents the engineering entity containing all information used to instruct how to perform the needed set of manufacturing operations in the runtime environment. The operation definition 8 (or also called product production rule) itself comprises at engineering level a number of segments from which in the runtime environment segment requirements 10 are generated which in detail define the various manufacturing operations (steps) of a work order (operation request 6). Therefore, the operation requests 6 are made up of a number of the segment requirements 10 which correspond to process segments 12. Each segment requirement 10 may now comprise a number of detailed information on the detailed requirement to execute the desired operation requests 6 which are created from the information which is provide at engineering level by the various operation definitions 8. Only to mention a few, the segment requirements 10 may comprise a number of segment parameters 14, personnel requirements 16, equipment requirements 18, material produced requirements 20, material consumed requirements 22 and consumable expected 24.

In a MES system, all operation definitions 8 that describe how to perform the operations foreseen in a specific plant site are typically available either imported from the ERP or directly defined by the plant engineers at engineering level. When the ERP system downloads the operation schedule 4, the ERP system must know the work orders which are involved in the operations schedule 4. The set of corresponding work order (operation requests 6) must then be created starting from the corresponding operation definitions 8 and then sent to the execution according to the operation schedule 4. Therefore, this step is quiet important since the creation of the respective work orders helps both the ERP and the MES to fulfill their respective tasks. The ERP extracts from the work orders all information relevant to the material provisions, the human resource managements, purchasing, orders, profits, finance, inventory controls, customer managements etc. For the MES, the works orders are "translated" according to the segment requirements 10 into a set of manufacturing operations which are in the runtime environment executed at shop floor level. Therefore, for the overall efficiency of both the ERP and the MES, the creation of the effective work orders is a crucial activity (among many other activities).

The algorithm to perform this activity in an optimized way therefore can be summarized in the following steps:
a) make use of a set of predefined catalogues of works orders; said work order being originated from the operations definitions 8 that are used for a specific plant site;
b) on a request from the ERP, the algorithm has to extract the proper set of work orders from the catalogues thereby not requiring to create the work orders from scratch; and
c) modify the quantity information of the selected work orders to fit the operations request 6 originated by the ERP.

As mentioned above, the first step is the crucial part of the algorithm. The pre-requisite of the algorithm is the fact of having defined a set of catalogues of work orders already available when posting the request for the operation schedule which is foreseen to be executed once the respective work orders have been collected by the extraction from the catalogues. Each catalogue here comprises only the work orders corresponding to a specific operation definition 8 as source.

At engineering level, a job being asynchronous to the fulfilment of the request on the operation schedule - hereinafter called asynchronous job - populates the catalogues with the right number of work orders for each manufacturing operation or service, such as maintenance, inventory and so on, the plant has to execute on a daily basis. The amount of the pre-defined work orders must be sufficient to satisfy the execution capacity of the plant (e.g. if the plant has a range of 100 work orders a day for a specific product, the catalogue comprising the work orders originated from this operation definition 8 for that product has to comprise at least 105 work orders. So, the asynchronous job is configurable to allow the system to have the right number of work orders for each operation definition 8. The asynchronous job is also in charge of the asynchronous update of the already created work orders with respect to the changes made to the effective operation definition 8 in order to have always valid work orders. A typical change could be for example the change in a recipe of ingredients, a change in the procedure of preparing a product, a change in the maintenance interval and so on.

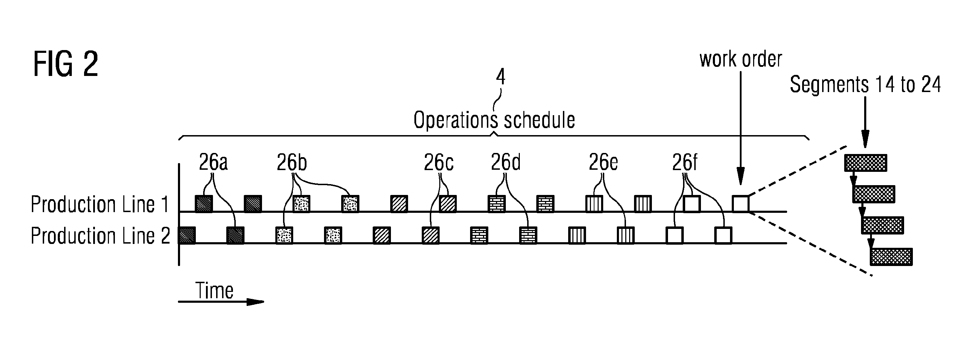

When ERP downloads the operation schedule 4, the MES system in response extracts the corresponding work orders for the respective catalogues in order to satisfy the ERP's download request. In Figure 2, different patterns for work orders 26a to 26f. In this example, six catalogues of work orders are required since there are at least six operation definitions 8 involved. In the same example, the MES requires at least four work orders for each catalogue in order to satisfy the ERP's download request. The work orders inside the catalogues have all the characteristics which enable the MES to immediately execute these work orders except for the values with respect to the quantities to be produced. In fact, the work orders in the catalogues are created with reference quantities that must be updated prior to the release for execution of the production. Advantageously, it is sufficient to change the main quantity to benefit from an automatic propagation of the amended value in terms of a rescaling of all dependent quantities.

Therefore, the asynchronous job has to work with the correct configuration in order to populate properly the catalogues, the MES is enabled to react immediately to the ERP's download request. The extracted work orders corresponding to the operation schedule 4 are then ready to be executed without any delay due to the proper system alignment of the ERP and MES.

The use of the catalogues comprising ready-to-use work order reduces dramatically the response time of the MES to the ERP's download request. The algorithm contributes hereto in a way that the system load during the creation of the work orders is reduced significantly since the asynchronous job can populate the catalogue over an extended period of time without causing load peaks. The integration of both the ERP and the MES is improved due to the improved performances in the operation schedule download as well as in the creation of the work orders. Further, according to the definition of the work orders, the work orders are always consistent with the last valid operation definitions 8 and therefore, up-to-date with respect to the changes made in the engineering phase.

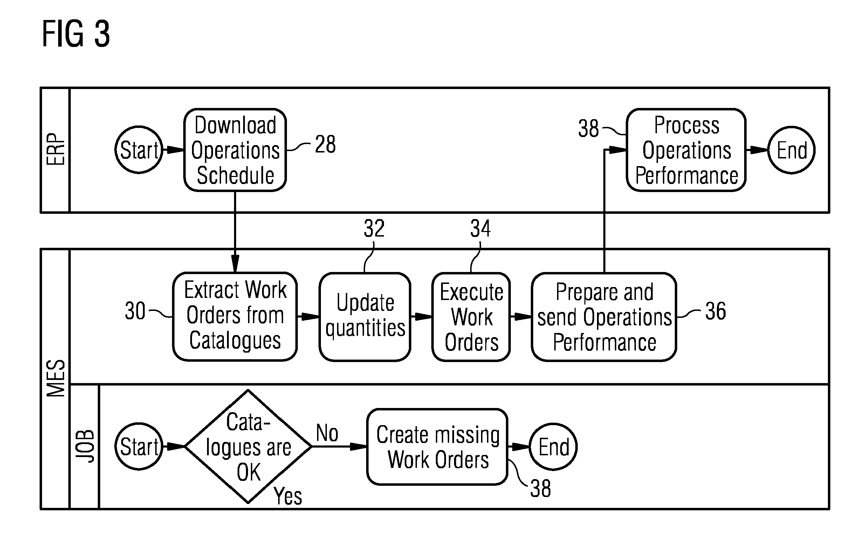

In order to summarize the relevant method step, reference is made to Figure 3 which depicts a workflow of the algorithm used for the extensive data exchange among the ERP and the MES. At the ERP the process is started by a command 28 to download the operation schedule and in particular to download the work orders assigned to this operation schedule. The ERP's download command 28 causes the response of the MES in terms of an extraction 30 of the respective work orders from the pre-defined catalogues. Once this extraction has been completed, the quantities are updated at step 32 and the work orders are subsequently executed at step 34. After the completion (optionally already during the execution of the extracted work orders), the MES prepares at step 36 operation performance data which are forwarded to the ERP and processed at ERP level at Step 38. With the summary report of the operation performance, the production process which was represented by the initial operation schedule is completed.

At MES level, the workflow of the asynchronous job is also schematically indicated. If the catalogues are properly instantiated, the asynchronous job ends. If not, any missing work order is created at step 38 before the asynchronous job ends. The schematic sketch of the workflow of the asynchronous job also indicates the independence of this job from the process for the fulfilment of the ERP's download request on the operations schedule 4.

## Claims

1. A method for increasing the work performance of a manufacturing executing system (MES) and an enterprise resource planning system (ERP), said method comprising the steps of:
a) providing the enterprise resource planning system (ERP) being enabled for planning the business resources of a production plant and for releasing production orders to the manufacturing execution system;
b) providing the manufacturing execution system (MES) being enabled to control and to execute a production process on the production plant according to the production orders,
c) creating an operation schedule (4) by the enterprise resource planning system (ERP); said operation schedule (4) representing a production workflow of the production process;
d) creating a number of operation definitions (8); each operating definition (8) comprising a catalogue of pre-defined respective work orders (6);
e) downloading the operation schedule (4) by the enterprise resource planning system (ERP) thereby creating a set of corresponding work orders being executable by the manufacturing execution system (MES); said creating being achieved by extracting (30) at least one of the pre-defined work orders relevant to the operation schedule (4) from the catalogues;
f) updating (32) the quantities for the production process in the extracted work orders by the manufacturing execution system (MES);
g) executing the updated work orders under the control of the manufacturing execution system (MES); and
h) preparing (36) operation performance data on the executed work orders by the manufacturing execution system (MES), and
i) calculating (38) the process operation performance by the enterprise resource planning system (ERP).

2. The method according to claim 1, wherein the catalogue are filled by an asynchronous job (JOB) at engineering level of the manufacturing execution system (MES).
